# EUROPEAN PATENT APPLICATION

(11) **EP 2 884 072 A1**
(43) Date of publication of application: **17.06.2015**
(21) Application number: 14197827.0
(22) Date of filing: 12.12.2014
(51) Int. Cl.: F02B 29/04, F02M 25/07

(54) **Intake manifold for a supercharged internal combustion engine with a built-in intercooler and provided with a heat exchanger for a high-pressure EGR circuit**

(30) Priority: 12.12.2013 IT BO20130684
(71) Applicant: Magneti Marelli S.p.A., 20011 Corbetta (MI) (IT)
(72) Inventor: Fato, Massimo, 41124 Modena (IT)
(74) Representative: Maccagnan, Matteo

(57) **Abstract**

Intake manifold (4) for a turbocharged internal combustion engine (1) provided with a compressor (14) and a high-pressure gas recirculation branch (EGR_{HP}) ; the intake manifold (4) is provided with a central body (31) fed with a flow of air coming from the compressor (14) which houses, on the inside, a first air/water heat exchanger (9) to cool the air flow coming from the compressor (14); and a second air/water heat exchanger (21) to cool a flow of air in the high-pressure gas recirculation branch (EGR_{HP}); wherein the first heat exchanger (9) and the second heat exchanger (21) are in hydraulic communication so that the water used to cool the air flow coming from the compressor (14) is subsequently used to cool the air flow of the high-pressure gas recirculation branch (EGR_{HP}).

## Description

### TECHNICAL FIELD

The present invention relates to an intake manifold for a supercharged internal combustion engine with a built-in intercooler and provided with a heat exchanger for a high-pressure EGR circuit.

### PRIOR ART

The internal combustion engines supercharged by means of a turbocharger supercharging system are provided with a number of injectors which inject the fuel for combustion in respective cylinders, each of said cylinders is connected to an intake manifold by way of at least one respective intake valve and to an exhaust manifold by way of at least one respective exhaust valve. Said exhaust manifold is connected to an exhaust duct which feeds the exhaust gas produced by the combustion to an exhaust system, which emits the gas produced by combustion into the atmosphere. The intake manifold receives fresh air (i.e. air from the external environment) through an intake duct, along which an intercooler having the function to cool the intake air is arranged. Connected to the exhaust manifold 5 is an exhaust duct which feeds the exhaust gas produced by the combustion to an exhaust system which emits the gas produced by combustion into the atmosphere.

Finally, the supercharging system of the internal combustion engine comprises a turbocharger provided with a turbine, which is arranged along the exhaust gas duct which are expelled from the cylinders, and a compressor, which is arranged along the intake duct and is mechanically connected to the turbine to be driven in rotation by the turbine itself so as to increase the air pressure in the feeding duct.

The intercooler suited to cool the intake air consists essentially in an air/air heat exchanger which is interposed between the compressor and the intake manifold to feed the air taken in from the compressor out flow to the intake manifold.

To remedy these problems various solutions have been proposed.

US2013220289 describes an intake manifold for an internal combustion engine supercharged by means of a turbocharger provided with a turbine and with a compressor and comprising a plurality of cylinders and an exhaust gas recirculation EGR circuit divided into a low pressure branch and a high-pressure branch. The intake manifold comprises a central body which is fed with a flow of fresh air taken in from the compressor, it houses, on the inside, a first air/water heat exchanger to cool the flow of fresh air taken in from the compressor and is connected to the plurality of cylinders; and a second heat exchanger. The first air/water heat exchanger and the second heat exchanger are in hydraulic communication so that the water used to cool the flow of fresh air taken in from the compressor is subsequently cooled in the second heat exchanger. The second heat exchanger is part of a circuit comprising a pump and, if necessary, is used for the conditioning of a heat exchanger of the low-pressure branch of the EGR circuit arranged alternately in series or in parallel to the second heat exchanger.

FR2908833 describes an intake manifold for an internal combustion engine supercharged by means of a turbocharger provided with a turbine and with a compressor and comprising a plurality of cylinders and an exhaust gas recirculation EGR circuit. The intake manifold comprises a central body which is fed with a flow of fresh air taken in from the compressor, it houses, on the inside, a first heat exchanger to cool the flow of fresh air taken in from the compressor with the interposition of an interception valve from which a bypass duct of the first heat exchanger originates and is connected to the plurality of cylinders; and a second heat exchanger to cool a gas flow of the EGR circuit.

Said solutions are however characterized by considerable overall dimensions inside the engine compartment and by rather limited performance in terms of volumetric efficiency.

### DESCRIPTION OF THE INVENTION

Object of the present invention is to obtain an intake manifold for a supercharged internal combustion engine with a built-in intercooler and provided with a heat exchanger for a high-pressure EGR circuit which is free from the drawbacks of the state of the art, is reliable and easy and inexpensive to manufacture.

According to the present invention an intake manifold for a supercharged internal combustion engine with a built-in intercooler and provided with a heat exchanger for a high-pressure EGR circuit is provided as defined in the appended claims.

### BRIEF DESCRIPTION OF THE DRAWINGS

The present invention will now be described with reference to the accompanying drawings, which illustrate an example of a non-limiting embodiment wherein:
- Figure 1 illustrates schematically a first embodiment of a supercharged internal combustion engine provided with a high-pressure EGR circuit and with a low pressure EGR circuit;
- Figure 2 illustrates an intake manifold with built-in intercooler and provided with a heat exchanger for a high-pressure EGR circuit of the supercharged internal combustion engine of Figure 1 obtained in accordance with the present invention;
- Figure 3 is a sectional view along the line III-III of a detail of Figure 2; and
- Figure 4 schematically illustrates a second embodiment of the supercharged internal combustion engine of Figure 1.

### PREFERRED EMBODIMENTS OF THE INVENTION

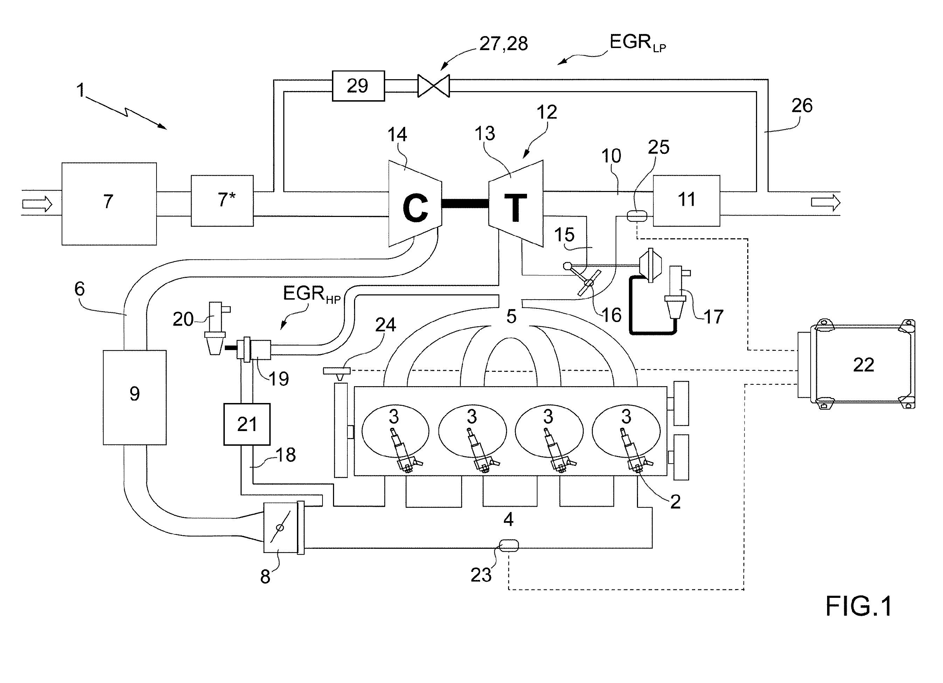

In Figure 1, the number 1 indicates as a whole an internal combustion engine supercharged by means of a turbocharger supercharging system.

The internal combustion engine 1 comprises four injectors 2 which inject the fuel directly in four cylinders 3, each of which is connected to an intake manifold 4 by way of at least one respective intake valve (not shown) and to an exhaust manifold 5 by way of at least one respective exhaust valve (not shown). The intake manifold 4 receives fresh air (i.e. air from the outside) through an intake duct 6, which is provided with an air filter 7 and is regulated by a throttle valve 8. Along the intake duct 6 downstream of the air filter 7, an Air Flow Meter 7* is also arranged which is suited to detect the flow rate of the air taken in from the internal combustion engine 1.

Along the intake duct 6 an intercooler 9 is arranged having the function of cooling the air taken in. Connected to the exhaust manifold 5 is an exhaust duct 10 which feeds the exhaust gas produced by the combustion to an exhaust system, which emits the gas produced by the combustion into the atmosphere and normally comprises at least one catalyst 11 (possibly provided with a particulate filter) and at least one muffler (not illustrated) arranged downstream of the catalyst 11.

The supercharging system of the internal combustion engine 1 comprises a turbocharger 12 provided with a turbine 13, which is arranged along the exhaust duct 10 to rotate at high speed under the action of the exhaust gas expelled by the cylinders 3, and a compressor 14, which is arranged along the intake duct 6 and which is mechanically connected to the turbine 13 to be driven in rotation by the turbine 13 itself so as to increase the air pressure in the feeding duct 6.

Along the exhaust duct 10 a bypass duct 15 is provided which is connected in parallel to the turbine 13 so as to have its ends connected upstream and downstream of the turbine 13 itself; along the bypass duct 15 a wastegate valve 16 is arranged, which is suited to adjust the flow rate of the exhaust gas flowing through the bypass duct 15 and is controlled by a solenoid valve 17.

The internal combustion engine 1 further comprises a high-pressure EGR_{HP} circuit that in turn comprises a bypass duct 18, which is connected in parallel to the assembly formed by the four cylinders 3, by the intake manifold 4 and by the exhaust manifold 5. Along the bypass duct 18 a Poff valve 19 is arranged, which is suited to adjust the flow rate of the exhaust gas flowing through the bypass duct 18 and is controlled by a solenoid valve 20 EGR. Along the bypass duct 18, downstream of the Poff valve 19, a heat exchanger 21 is arranged having the function of cooling the gas flowing out from the exhaust manifold 5.

The internal combustion engine 1 is controlled by an electronic control unit 22, which supervises the operation of all components of the internal combustion engine 1. The electronic control unit 22 is connected to a sensor 23 which measures the temperature and the pressure of the air in the intake manifold 4, to a sensor 24 which measures the rotation speed of the internal combustion engine 1, and to a sensor 25 (typically a linear oxygen UEGO or UHEGO type sensor - of known type and not described in detail) that measures the air/fuel ratio of the exhaust gas upstream of the catalyst 11.

The internal combustion engine 1 finally comprises a low pressure EGR_{LP} circuit which in turn comprises a bypass duct 26 provided along the exhaust duct 10; the bypass duct 26 is connected in parallel to the turbocharger 12. Along the duct 26 a bypass valve 27 is arranged, which is suited to adjust the flow rate of the exhaust gas flowing through the bypass duct 26 and is controlled by a solenoid valve 28 EGR. Along the bypass duct 26, downstream of the valve 27, a heat exchanger 29 is arranged having the function of cooling the gas flowing out from the exhaust manifold 5 and the flowing in the compressor 14.

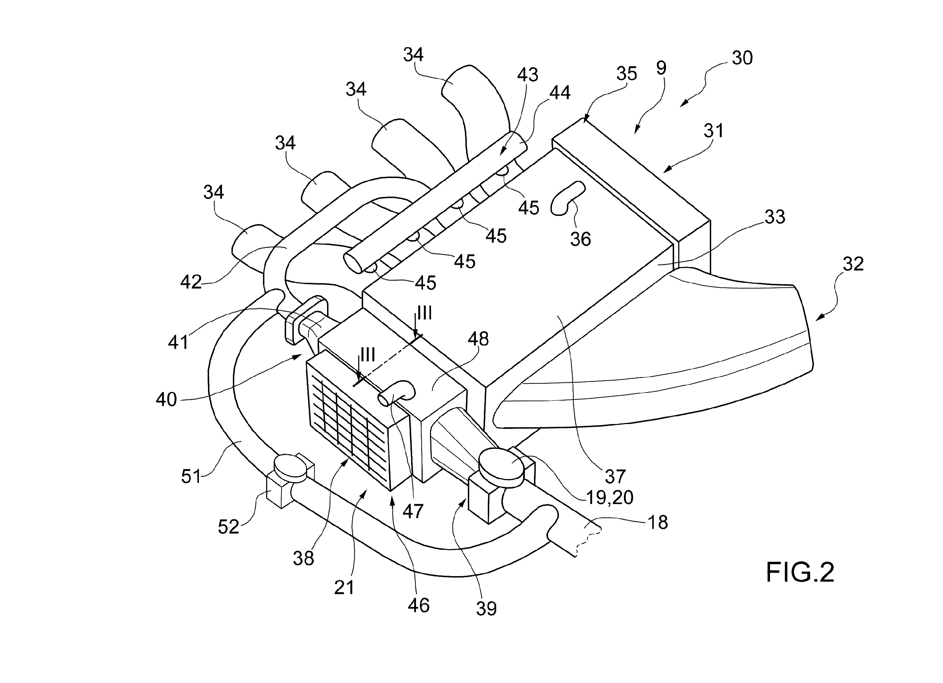

In Figure 2 a module 30 is shown which integrates the intake manifold 4, the intercooler 9 and the heat exchanger 21 of the high-pressure EGR_{HP}.

In particular, the module 30 comprises a central body 31 made of any thermoplastic material that is able to bear temperatures ranging from 210 to 215 °C. The central body 31 has a substantially parallelepiped shape and internally defines the intake manifold 4 for colleting the air coming in from the compressor 14 to be fed to the four cylinders 3. The central body 31 comprises an inlet opening 32 for the fresh air taken in which communicates with the intake duct 6 to introduce the fresh air coming from the compressor 14 inside the central body 31. According to a preferred alternative, the inlet opening 32 is formed in a major lateral wall 33 of the body and extends substantially for the entire width of the major lateral wall 33.

Inside the central body 31 the intercooler 9 is defined having the function of cooling the fresh air taken in from the compressor 14. The intercooler 9 substantially consists in an air/water heat exchanger wherein the fresh air taken in from the intake duct 6 (i.e. coming from the compressor 14) enters at a temperature of about 200 °C. The fresh air taken in from the intake duct 6 is cooled to about 50 °C and leaves the central body 31 through four ducts 34, each of which is associated with a respective cylinder 3, and along which the respective intake valves (not illustrated) are arranged. The ducts 34 are provided in correspondence to a major lateral wall of the central body 31 opposite to the major lateral wall 33 wherein the inlet opening 32 is formed.

The central body 31 is further provided with a water fed cooling hydraulic circuit 35. The water enters inside the central body 31 through an inlet duct 36 arranged in correspondence to an end of an upper wall 37 of the central body 31 and is fed inside the central body 31 itself in a direction substantially transverse to the passage of the fresh air taken in from the compressor 14. In particular, the inlet duct 36 is arranged in the vicinity of the edge defined by the upper wall 37 and by a minor lateral wall of the central body 31.

The module 30 also comprises the heat exchanger 21 of the high-pressure EGR_{HP} circuit, which comprises a box-shaped body 38 of substantially parallelepiped shape and is arranged next to the central body 31. An outer surface of the box-shaped body 38 is arranged directly facing to and in contact with a minor lateral surface of the central body 31. The outer surface of the box-shaped body 38 substantially has the same width as the minor lateral surface of the central body 31 so as to obtain a rather compact configuration.

The heat exchanger 21 of the high-pressure EGR_{HP} circuit comprises an inlet opening 39 for the gas flowing out from the exhaust manifold 5 that communicates with the bypass duct 18 and is formed in a minor lateral wall of the box-shaped body 38. According to a preferred alternative, the inlet opening 32 of the fresh air taken in from the compressor 14 and the inlet opening 39 for the gas flowing out from the exhaust manifold 5 are formed side by side on the same side of the module 30. The heat exchanger 21 of the high-pressure EGR_{HP} circuit than comprises an outlet opening 40 for the gas coming from the exhaust manifold 5. The outlet opening 40 is formed in a minor lateral wall of the parallelepiped-shaped body 38 opposite to the minor lateral wall wherein the inlet opening 39 is formed. The heat exchanger 21 of the high-pressure EGR_{HP} circuit is defined by an air/water heat exchanger wherein the gases flowing out from the exhaust manifold 5 enter with temperatures around 600 °C. The gases flowing out from the exhaust manifold 5 are cooled down to about 150 °C and leave the box-shaped body 38 through an outlet duct 41 which feeds the four cylinders 3.

It seems clear that the intercooler 9 is in hydraulic communication directly with the heat exchanger 21 of the high-pressure EGR_{HP} circuit. In other words, the intercooler 9 is in hydraulic communication with the heat exchanger 21 of the high-pressure EGR_{HP} circuit without the interposition of further devices; in this way, the water used to cool the flow of fresh air taken in from the compressor 14 is subsequently used to cool the gas flow of the high-pressure branch EGR_{HP}.

According to a preferred alternative, the module 30 comprises a connecting channel 42 that feeds the gas flowing out from the heat exchanger 21 of the high-pressure EGR_{HP} circuit to a distribution manifold 43. The distribution manifold 43 made of metal material is arranged close to the central body 31 and in the vicinity of the four ducts 34 which feed the four cylinders 3. The distribution manifold 43 comprises a feeding duct 44 defined by a main cylindrical tubular channel 44, from which four secondary cylindrical tubular channels 45 further depart, which are arranged perpendicularly relative to the main cylindrical tubular channel 44 and to the ducts 34; each secondary cylindrical tubular channel 45 is adapted to be coupled with a respective duct 34 for feeding the gas flowing out from the heat exchanger 21 of the high-pressure EGR_{HP} circuit. In this way it is possible to feed in a uniform manner the four ducts 34 (and, consequently, the four cylinders 3) with the same amount of gas flowing out from the heat exchanger 21 of the high-pressure EGR_{HP} circuit.

It is also important to highlight that the distribution manifold 43 and, in particular, the main cylindrical tubular channel 44, is internally shaped so as to prevent any backflow towards the central body 31. In other words, the main cylindrical tubular channel 44, is made so that the impurities contained in the gas flowing out from the heat exchanger 21 of the EGR_{HP} circuit can enter the central body 31.

The heat exchanger 21 of the high-pressure EGR_{HP} circuit then comprises a respective water fed cooling hydraulic circuit 46. The water coming from the central body 31 enters inside the box-shaped body 38 and comes out through an outlet duct 47 arranged in correspondence to an upper wall 48 of the box-shaped body 38.

It is important to highlight that the water of the hydraulic cooling circuit 35 of the intercooler 9 is then subsequently used inside the hydraulic cooling circuit 46 of the heat exchanger 21 of the high-pressure EGR_{HP} circuit. In other words, the cold water enters inside the central body 31 through the inlet duct 36 arranged in correspondence to the upper wall 37 of the central body 31 itself, exchanges heat with the fresh air taken in from the intake duct 6 (i.e., coming from the compressor 14) inside the central body 31, exchanges heat with the air flowing out the exhaust manifold 5 inside the heat exchanger 21 of the high-pressure EGR_{HP} circuit, flows out at elevated temperatures of about 80-90 °C from the heat exchanger 21 of the high-pressure EGR_{HP} circuit through the outlet duct 47 arranged in correspondence to the upper wall 48 of the parallelepiped-shaped body 38 and is subsequently cooled by a radiator (not illustrated).

It is possible to use the cold water of the hydraulic cooling circuit 35 of the intercooler 9 also inside of the hydraulic cooling circuit 46 of the heat exchanger 21 of the high-pressure EGR_{HP} circuit only in the case wherein the water in its path inside the module 30 encounters first the fresh air taken in from the intake duct 6 (i.e., coming from the compressor 14) and then the gas flowing out from the exhaust manifold 5. In fact, in the process of cooling the fresh air taken in from the intake duct 6 (i.e., coming from the compressor 14) transfers heat to the water to pass from an inlet temperature of about 200°C to an outlet temperature of about 50°C. The water flowing out from the central body 31 has a temperature of about 55-65°C and can be used in the process of cooling the gas flowing out from the exhaust manifold 5 which transfers heat to the water to pass from an inlet temperature about 600 °C to an outlet temperature of about 150 °C.

The hydraulic cooling circuit 46 of the heat exchanger 21 of the high-pressure EGR_{HP} circuit and the hydraulic cooling circuit 35 of the intercooler 9 thus constitute a single hydraulic circuit to cool the assembly formed by the intercooler 9 and by the heat exchanger 21 of the high-pressure EGR_{HP} circuit. The hydraulic cooling circuit of the assembly formed by the intercooler 9 and the by the heat exchanger 21 of the high-pressure EGR_{HP} circuit comprises the water inlet duct 36 which is arranged in correspondence to the intercooler 9 and the water outlet duct 47 which is arranged in correspondence to the heat exchanger 21 of the high-pressure EGR_{HP} circuit.

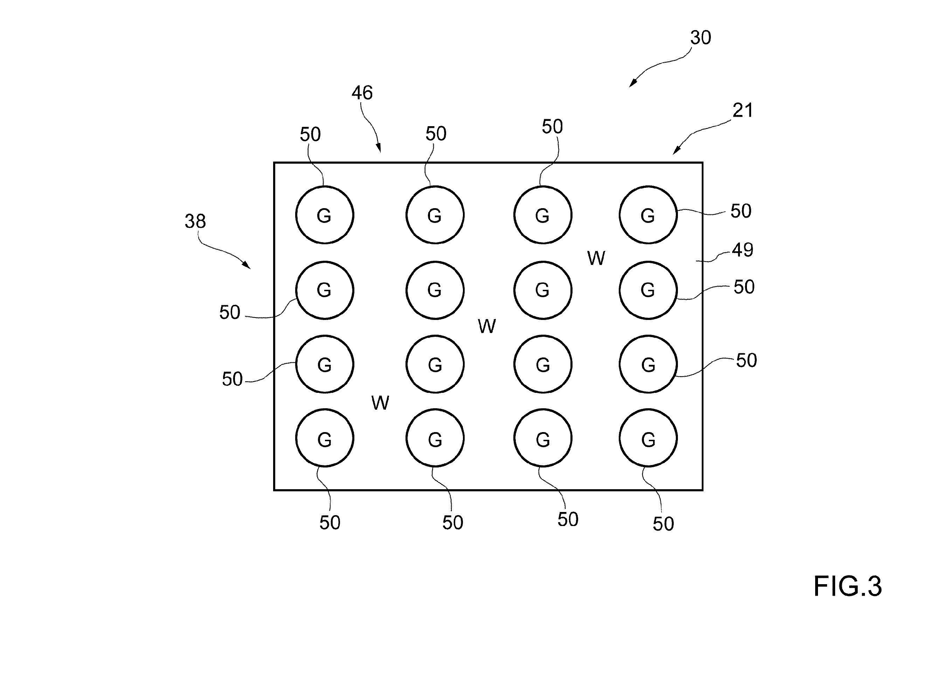

According to a preferred alternative illustrated in Figure 3, the heat exchanger 21 of the high-pressure EGR_{HP} circuit is defined by a fire-tube heat exchanger 49 wherein the outlet gas from the exhaust manifold 5, indicated with G, are channeled in a bundle of tubes 50 arranged parallel to each other and immersed in water, indicated with W, of the hydraulic cooling circuit 46.

According to an alternative not illustrated, the heat exchanger 21 of the high-pressure EGR_{HP} circuit is defined by a fire-tube heat exchanger wherein the water of the hydraulic cooling circuit 46 is channeled into a bundle of tubes arranged parallel to one other and immersed in the outlet gas from the exhaust manifold 5 which are then cooled by convection.

The heat exchanger 21 of the high-pressure circuit EGR_{HP} is also made of any thermoplastic material able to bear temperatures ranging from 210 to 215°C.

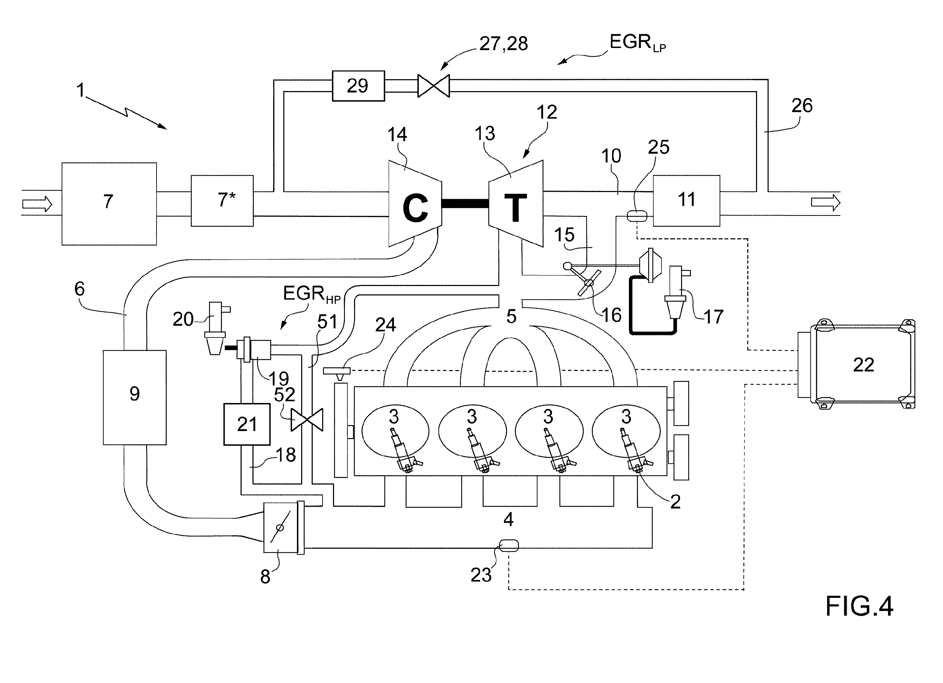

According to a preferred alternative illustrated in Figures 2 and 4, the module 30 comprises a bypass duct 51 which is connected in parallel to the heat exchanger 21 of the high-pressure EGR_{HP} circuit. The bypass duct 51 originates from the bypass duct 18 and flows into the connecting channel 42 that feeds the gas flowing out from exhaust manifold 5 to the distribution manifold 43. Along the bypass duct 51 a valve 52 is arranged, which is suited to adjust the flow rate of the gas flowing out from the exhaust manifold 5 that flow through the bypass duct 51 and is controlled by a bypass solenoid valve. The bypass duct 51 allows to have, when necessary, a flow of hot gas (with temperatures in the order of 600 °C) to be introduced directly inside the cylinders 3.

According to a first alternative illustrated in Figure 2, the bypass duct 51 originates from the bypass duct 18 upstream of the Poff valve 19 and flows into the connecting channel 42 that feeds the gas flowing out from exhaust manifold 5 to the distribution manifold 43.

According to a further alternative not shown, the bypass duct 51 originates from the bypass duct 18 downstream of the Poff valve 19 and flows into the connecting channel 42 that feeds the gas flowing out from exhaust manifold 5 to the distribution manifold 43.

The module 30 as described heretofore has the advantage of being compact, space-saving and enable good performance, in terms of volumetric efficiency, for both the intercooler 9 and the heat exchanger 21 of the high-pressure EGR_{HP} circuit.

## Claims

1. An intake manifold (4) for an internal combustion engine (1) supercharged by means of a turbocharger (12) provided with a turbine (13) and a compressor (14) and comprising a plurality of cylinders (3) and an exhaust gas recirculation EGR circuit subdivided into a low-pressure branch (EGR_{LP}) and a high-pressure branch (EGR_{HP}); the intake manifold (4) comprises a central body (31) which is fed with a flow of fresh air taken in from the compressor (14), houses, on the inside, a first air/water heat exchanger (9) to cool the flow of fresh air taken in from the compressor (14), and is connected to the plurality of cylinders (3); a second air/water heat exchanger (21) to cool a gas flow of high-pressure branch (EGR_{HP}); the intake manifold is **characterized in that** the first air/water heat exchanger (9) is directly in hydraulic communication with the second air/water heat exchanger (21) so that the water used to cool the flow of fresh air taken in from the compressor (14) is subsequently used to cool the gas flow of the high-pressure branch (EGR_{HP}); and **in that** it comprises a bypass duct (51), which is connected in parallel to the second air/water heat exchanger (21) to cool a gas flow of the high-pressure branch (EGR_{HP}) in order to have, when necessary, a flow of hot air to be fed directly to the cylinders (3).

2. The manifold according to claim 1 and comprising a valve (52), which is arranged along the bypass duct (51) and is suited to adjust the flow rate of the gas of the high-pressure branch (EGR_{HP}) flowing through the bypass duct (51).

3. The manifold according to claim 1 or 2, wherein the central body (31) and/or the second air/water heat exchanger (21) are made of any thermoplastic material that is able to bear temperatures ranging from 210 to 215 °C.

4. The manifold according to one of the preceding claims, wherein the second air/water heat exchanger (21) to cool a gas flow of the high-pressure branch (EGR_{HP}) is a fire-tube heat exchanger (49) wherein the gas flow of the high-pressure branch (EGR_{HP}) is channeled into a bundle of tubes (50) arranged parallel to one another and immersed in water.

5. The manifold according to one of claims 1 to 3, wherein the second air/water heat exchanger (21) to cool a gas flow of the high-pressure branch (EGR_{HP}) is a fire-tube heat exchanger (49) wherein the water to cool the gas flow of the high-pressure branch (EGR_{HP}) is channeled into a bundle of tubes arranged parallel to one another and immersed in the gas flow of the high-pressure branch (EGR_{HP}).

6. The manifold according to one of the preceding claims and comprising a distribution manifold (43), which is connected to the second air/water heat exchanger (21) for feeding the gas flow flowing out of the second air/water heat exchanger (21) to the cylinders (3).

7. The manifold according to claim 6, wherein the distribution manifold (43) is made of a metal material.

8. The manifold according to claim 6 or 7, wherein the distribution manifold (43) comprises a feeding duct (44), which is defined by a main cylindrical tubular channel (44) to feed the gas flow flowing out of the second air/water heat exchanger (21) to the cylinders (3); wherein the main cylindrical tubular channel (44) having such a shape so as to prevent the gas flow flowing out of the second air/water heat exchanger (21) from flowing back to the central body (31).

9. The manifold according to one of the preceding claims, wherein the second air/water heat exchanger (21) to cool a gas flow of the high-pressure branch (EGR_{HP}) comprises a substantially parallelepiped-shaped body (38) which is arranged next to the central body (31); an outer surface of the body (38) is arranged directly facing and in contact with a lateral surface of the central body (31).

10. The manifold according to claim 9, wherein the outer surface of the body (38) substantially has the same width as the lateral surface of the central body (31).

11. The manifold according to one of the preceding claims and comprising a hydraulic cooling circuit (35, 46) of the first air/water heat exchanger (9) and of the second air/water heat exchanger (21), which comprises, in turn, a water inlet duct (36), which is arranged in correspondence to a wall (37) of the central body (31), and a water outlet duct (47), which is arranged in correspondence to a wall (48) of the second air/water heat exchanger (21).
